# EUROPEAN PATENT SPECIFICATION

(11) **EP 2 493 347 B1**
(45) Date of publication and mention of the grant of the patent: **23.07.2014**
(21) Application number: 10778597.4
(22) Date of filing: 27.10.2010
(51) Int. Cl.: A43B 17/08, B29D 35/12, A43B 7/08

(54) **Insole with ventilation system for a shoe and its method of production**
Einlegesohle mit Belüftungssystem für einen Schuh und Verfahren zu ihrer Herstellung
Semelle intérieure avec système de ventilation pour une chaussure et son procédé de fabrication

(30) Priority: 29.10.2009 IT MC20090224
(43) Date of publication of application: 05.09.2012
(73) Proprietor: Gruppo Meccaniche Luciani S.r.l., 62014 Corridonia (MC) (IT)
(72) Inventor: GRAZIANI, Giordano, I-62014 Corridonia (mc) (IT); PAGLIARI, Augusto, I-62014 Corridonia (mc) (IT)
(74) Representative: Cutropia, Gianluigi
(86) International application number: PCT/EP2010/066230
(87) International publication number: WO 2011/051320

(56) References cited:
- EP-A1- 0 594 518
- WO-A1-2010/115737
- JP-A- 7 265 107
- US-A- 5 860 225
- US-A- 5 996 250
- US-A1- 2004 111 919
- US-A1- 2005 022 423
- US-A1- 2006 143 943
- US-A1- 2006 156 575

## Description

The present application for industrial invention relates to a shoe with ventilation or transpiration system, and in particular to an accident-prevention shoe.

As it is known, a shoe is mainly made of an upper that wraps the foot around and an outsole that is glued to the upper and acts as tread. In traditional shoes the two parts are manufactured separately and then glued. Therefore, before gluing the outsole on the upper, various mechanisms can be inserted in the outsole to obtain a transpiration system. Transpiration systems applied to this type of shoe are available on the market.

In some shoes a bottom is joined to the upper and then the outsole is glued or injection-molded under the bottom. In such a case, it is rather difficult to provide for ventilation systems integrated into the outsole, unless the bottom is suitably modified.

US5,826,349 and US2005/0005473 disclose shoes with ventilation system integrated in the outsole and in the bottom of the shoe.

Such an inconvenience is especially experienced in accident-prevention shoes that require a continuous metal plate in the outsole or a Kevlar sheet in the bottom. It appears evident that in such cases the ventilation mechanism interferes with the metal plate or Kevlar sheet.

WO 2010/115737 A1 discloses a shoe with a ventilation system fixed on the lower surface of the insole, with a moulded outsole covering the ventilation system. The outsole may include a metal or Kevlar plate embedded therein.

To solve these inconveniences, at least partially, solutions are known that provide for realizing a ventilation mechanism in the insole disposed above the bottom of the shoe.

US2008/0313930, US5,996,250, US3,180,039, and DE20119030 U. disclose an insole provided with ventilation mechanism.

However, these prior art insoles are only realized by coupling two sheets in order to contain the ventilation mechanism. Consequently, the structure of the insole is uncomfortable for the user. Moreover, such a type of insole structure cannot be molded with a suitable soft material, such as polyurethane foam.

US 2005/0022423 A1 discloses a method for production of an insole for shoes according to the preamble of claim 1, and an insole obtained by that method.

The purpose of the present invention is to eliminate the drawbacks of the prior art, disclosing a method for production of a insole with ventilation system that is comfortable for the user.

Another purpose of the present invention is to provide a insole with ventilation system that can be easily combined with a shoe without interfering with the bottom or the outsole of the shoe.

These purposes are achieved by the present invention according to the features claimed in the enclosed independent claims.

Advantageous embodiments are disclosed in the dependent claims.

The insole of the invention comprises a lower layer of polyurethane foam obtained with injection molding and disposed under a ventilation system, with borders folded in such a way to surround the peripheral borders of said ventilation system.

The advantages of the shoe comprising the insole of the invention are evident, since it provides for ventilation of the user's foot and has been studied in such a way that the ventilation system does not interfere with the bottom or outsole of the shoe and is at the same time comfortable for the user.

Additional characteristics of the invention will become more evident after a detailed description that refers to a merely illustrative, not limiting, embodiment, as shown in the enclosed figures, wherein:
Fig. 1 is an exploded top view that shows the various parts of the ventilation system of the shoe of the invention;
Fig. 2 is a top view of a leather sheet that is part of the ventilation system;
Fig. 3 is a bottom view of the ventilation system complete and assembled;
Fig. 4 is a cross-sectional view of the ventilation system assembled;
Fig. 5 is a diagrammatic cross-sectional view of a mold for injection of polyurethane foam for realization of the insole for shoe of the invention;
Fig. 5A is an enlarged view of the detail contained in the circle A of Fig. 5;
Fig. 6 is a cross-sectional view of the semi-finished insole obtained with the mold of Fig. 5;
Fig. 7 is a cross-sectional view of the finished insole after cutting the leather sheet; and
Fig. 8 is a cross-sectional view of a shoe with the insole of Fig. 7.

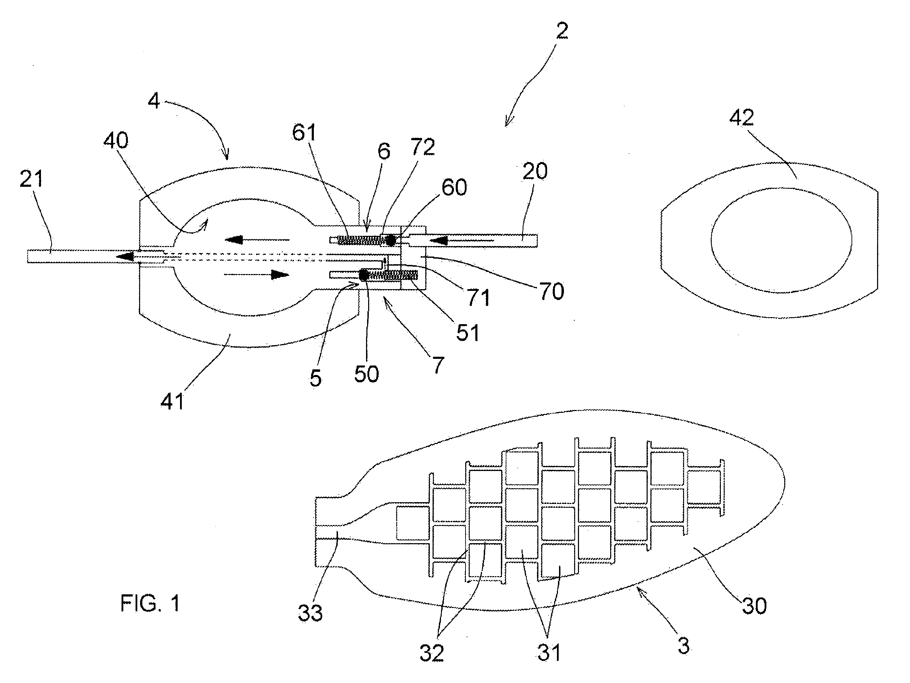

Now referring to Figs. 1 - 4 a ventilation system according to the invention is disclosed, which is generally indicated with numeral (2).

The ventilation system (2) comprises a lower sheet (3) of soft deformable material, such as soft thermoplastic polyurethane (TPU) with Shore A hardness lower than 65. The lower sheet (3) has a flattened shape, basically similar to the front of the foot.

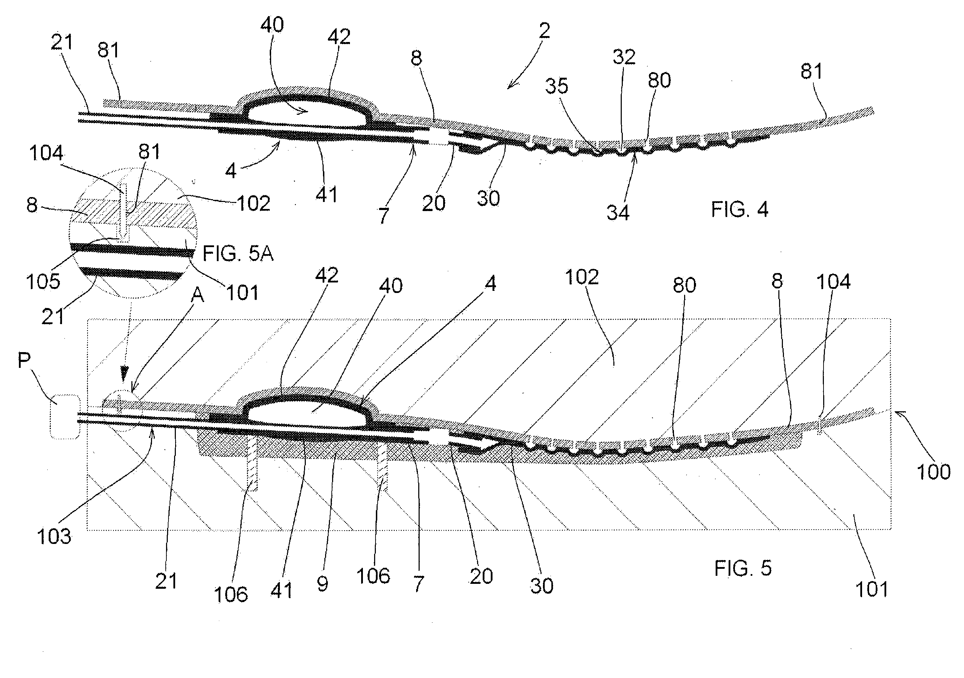

The lower sheet (3) comprises deformable spacers (31) that protrude upwards. As shown in Fig. 4, the spacers (31) are shaped as internally empty rectangular projections. This means that the lower side of the sheet (3) is provided with a plurality of recessed seats (34) in correspondence with the spacers (31).

A plurality of air spaces (32), which are shaped as communicating channels, is generated between the spacers (31). The air spaces (32) are in communication with an outlet channel (33) at the back end of the lower sheet (3). A connection pipe (20) is coupled in the outlet channel (33).

A pump (4) comprises a lower semibody (41) and an upper semibody (42) that are coupled to form a pumping chamber (40) (see Fig. 4) which communicates with the air spaces (32) of the lower sheet (3) by means of the connection pipe (20).

The lower semibody (41) is made of hard rigid plastic material, such as hard thermoplastic polyurethane (TPU) with Shore A hardness higher than 95. Instead, the upper semibody (42) is made of soft flexible plastic material, such as soft thermoplastic polyurethane (TPU) with Shore A hardness lower than 65. The two semibodies (41, 42) are coupled by heat sealing or gluing the peripheral portions.

The chamber (40) of the pump communicates with the air outlet pipe (21) that extends in the back to be brought out of the shoe.

A valve unit (7) is coupled in the front part of the pump (4). Referring to Fig. 1, the valve unit (7) comprises a rectangular block (70) made of rigid plastic material, which is provided with:
- a U-shaped conduit (71) with inlet in communication with the chamber (40) of the pump and outlet in communication with the outlet pipe (21); and
- a longitudinal conduit (72) with inlet in communication with the connection pipe (20) and outlet in communication with the chamber (40) of the pump.

The valve unit (7) can be made in one piece with the lower semibody (41) of the pump.

A first non-return (one-way) valve (5) is installed at the inlet of the U-shaped conduit (71). The first non-return valve (5) permits air flow from the chamber (40) of the pump to the air outlet pipe (21) and not vice versa.

For illustrative purposes, the first non-return valve (5) comprises a spherical shutter (50) with a spring (51) to maintain the valve normally closed.

A second non-return (one-way) valve (6) is installed in the longitudinal conduit (72). The second non-return valve (6) permits air flow from the connection pipe (20) to the chamber (40) of the pump and not vice versa.

For illustrative purposes, the second non-return valve (6) comprises a spherical shutter (60) with a spring (61) to maintain the valve normally closed.

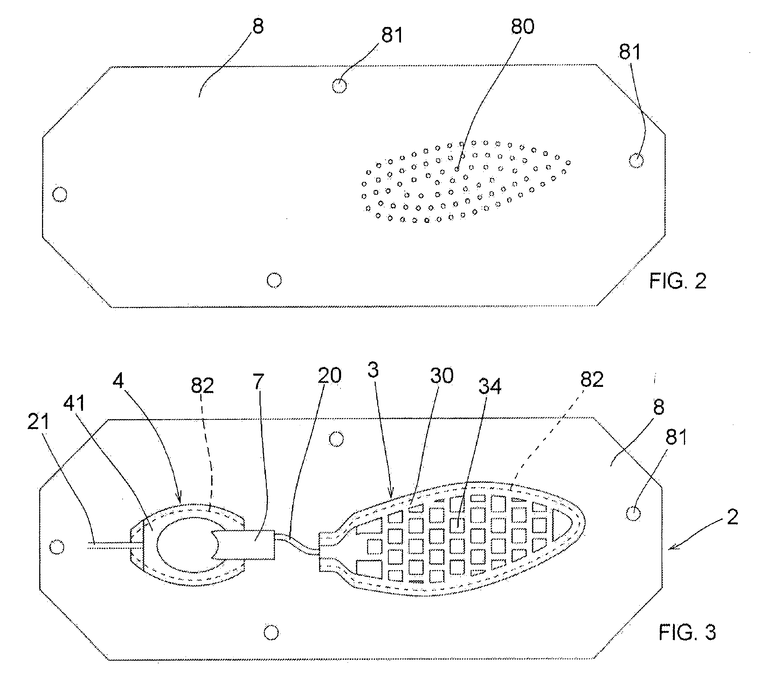

Referring to Fig. 2, an upper sheet (8) is formed of a strip made of leather or imitation leather, with very low thickness and a basically rectangular shape with rounded corners, with higher dimension than the foot. A plurality of transpiration holes (80) is obtained in the front and central part of the upper sheet (8). In addition, a plurality of holes (81) for fixing to the mold is obtained in a peripheral part of the upper sheet (8), as illustrated below.

Referring to Fig. 3, the upper sheet (8) is disposed above the lower sheet (3), the connection pipe (20), the valve unit (7) and the pump (4). The upper sheet (8) is coupled to the lower sheet (3) and to the pump (4) by means of stitching (82) or gluing, along a peripheral part of lower sheet (3) and pump (4). The function of the leather upper sheet (8) is to maintain the entire ventilation system (2) together during molding.

In this way, between the lower sheet (3) and the upper sheet (8) a wrapping is generated, defining a chamber (35) (Fig. 4) formed of air spaces (32) for the passage of air. The holes (80) of the upper sheet communicate with the chamber (35) and the air spaces (32) of the lower sheet. Therefore the air above the upper sheet (8) is extracted by the pump (4) and ejected outside the shoe through the outlet pipe (21).

Referring to Fig. 5, the ventilation system (2) is inserted in a mold (100) for injection molding of polyurethane foam. The mold (100) comprises a die (101) and a lid (102).

The die (101) is provided with a back longitudinal hole (103) from which the outlet pipe (21) comes out to be connected to an external pump (P).

The mold (100) is closed with the lid (102) that is uniformly disposed above the upper sheet (8) closing the holes (80). The lid (102) is provided with vertical pins (104) that protrude downwards. Referring to Fig. 5A, the pins (104) of the lid cross the peripheral holes (81) of the upper sheet and are engaged in suitable seats (105) of the die, firmly holding the upper sheet.

Between the die (101) and the ventilation system (2) a peripheral air space is generated, surrounding the perimeter peripheral border of the ventilation system.

The die (101) is provided with a plurality of vertical pins (106) that protrude upwards, which exert pressure on the lower semibody (41) of the pump, which is suitably made of rigid plastic material.

Pressurized air is injected by means of the external pump (P), flowing in the ventilation system (2) in such a way to generate a pressure of about 2 atmospheres inside the chamber (40) of the pump. In such a case, the non-return valves (5, 6) are adjusted in such a way to be one-way only in case of low pressure values. The high pressure of the air sent by the external pump allows to force the valve (5, 6) with reverse flow and put the chamber of the pump in pressure.

The pins (106) hold the ventilation system (2) against the lid (102) in such a way that polyurethane does not enter between the upper sheet (8) and the upper part of the pump (4) during injection or casting. To that end and for higher safety, air is injected inside the pump (4) so that the upper semibody (42) of the pump pushes the upper sheet (8) that perfectly adheres to the lid (102). Now, polyurethane foam can be injected in the mold (100), which is disposed under the ventilation system (2), forming a lower layer (9) of polyurethane foam. The polyurethane foam (9) flows in the peripheral air space, under the upper sheet (8), surrounding the perimeter peripheral border of the ventilation system (2). In this way the polyurethane foam also surrounds the peripheral borders of the ventilation system (2).

The ventilation system (2) has been specifically studied to allow for injection molding of polyurethane foam. In particular, the injection molding of polyurethane has been possible because of the materials used for the pump (4) and because of the fact that the chamber (40) of the pump is maintained under pressure during molding.

The injection of polyurethane foam (9) allows for perfect coupling between the lower sheet (3) and the upper sheet (8); between the two semibodies (41, 42) of the pump; between the valve unit (7) and the pump (4); and between the pump (4) and the upper sheet (8).

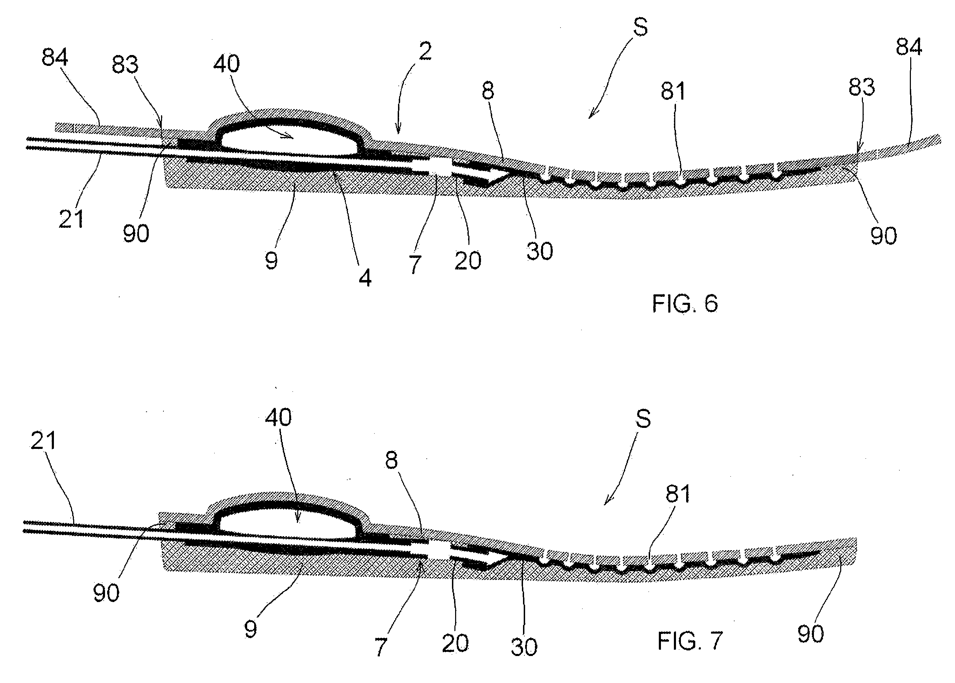

As shown in Fig. 6, a semi-finished insole (S) is obtained from the mold (100), wherein the lower layer (9) of polyurethane foam has perimeter borders (90) that surround the peripheral border of the ventilation system (2) under the upper sheet (8).

The upper sheet (8) has a peripheral portion (84) that protrudes externally with respect to the borders (90) of the polyurethane layer. Accordingly, the upper sheet (8) is cut with shearing process along a cutting line (83) in correspondence with the perimeter border (90) of the polyurethane layer. In such a way, as shown in Fig. 7, a finished insole (S) is obtained, which is compact, stable and comfortable.

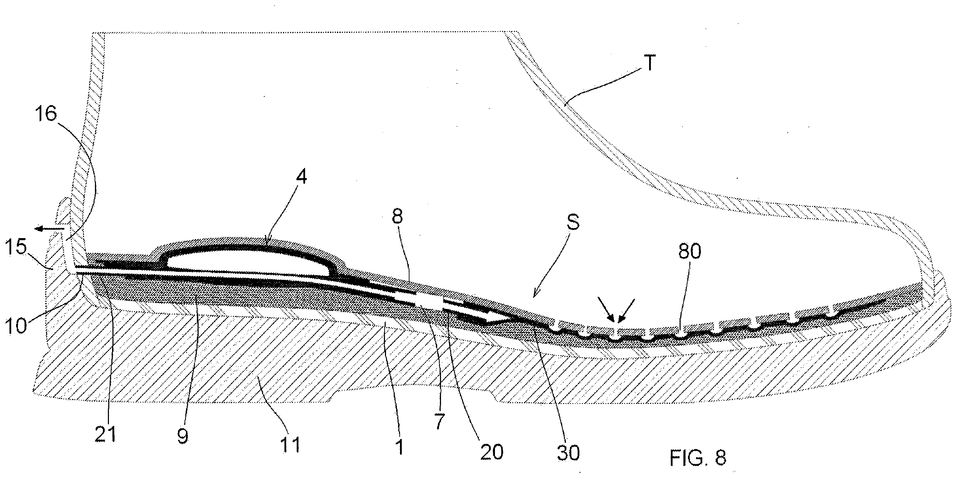

Fig. 8 shows a shoe with upper (T) and bottom (1) joined to the upper (T). An outsole (11) is fixed under the bottom (1).

The insole (S) comprising the ventilation system (2) is disposed on the bottom (1). A hole (10) is made in the heel area between bottom (1) and upper (T) to pass the air outlet pipe (21) in such a way that air is ejected out of the shoe. If necessary, in the heel area of the shoe, a quarter stiffener (15) is disposed between outsole (11) and upper (T), which is provided with a channel (16) in communication with the hole (10) to guide the ejection of the air out of the shoe.

The insole (S) can be of removable type or can be glued to the bottom (1).

When walking, the user presses the pump (4) with the heel. Consequently, the air is extracted through the holes (80) of the leather strip and ejected from the chamber (40) of the pump outwards, ensuring ventilation inside the shoe.

It must be noted that the ventilation system (2) of the invention does not modify or interfere with the structure of the bottom (1) or outsole (11) of the shoe. Therefore, in case of accident-prevention shoes, metal plates or Kevlar sheets can be disposed in the outsole (11) or in the bottom (1) without interfering with the ventilation system.

Numerous variations and modifications can be made to the present embodiment of the invention by an expert of the art, while still falling within the scope of the invention as claimed in the enclosed claims.

## Claims

1. Method for production of an insole (S) for shoes comprising the following steps:
- realization of a ventilation system (2) and placement of said ventilation system (2) inside a mold (100), and
- injection molding of polyurethane foam, in such a way to form a lower layer (9) of polyurethane foam disposed under the ventilation system (2) with borders (90) folded in such a way to surround the peripheral borders of said ventilation system (2), thereby obtaining the insole (S) comprising the lower layer (9) and the ventilation system (2),
**characterized in that**
said ventilation system (2) is obtained by means of the following steps:
- connection to a pump (4) of a lower sheet (3), by means of a connection pipe (20), said lower sheet (3) having the shape of the front of a foot and being provided with deformable spacers (31) that protrude upwards, the deformable spacers (31) are shaped as internally empty rectangular projections, so that the lower side of the lower sheet (3) is provided with a plurality of recessed seats (34) in correspondence with the deformable spacers (31),
- connection to said pump (4) of an air outlet pipe (21),
- application of an upper sheet (8) on said pump (4) and said lower sheet in order to form a wrapping between lower sheet and upper sheet generating a chamber (35), said upper sheet (8) being provided with holes (80) in communication with said chamber (35) of the wrapping.

2. Method as claimed in claim 1, **characterized in that** said pump (2) is obtained by coupling a rigid lower semibody (41) and a deformable upper semibody (42) in such a way to form a pumping chamber (40) and during the injection of polyurethane foam, the chamber (40) of the pump is maintained at a pressure of approximately two atmospheres.

3. Method as claimed in claim 1 or 2, **characterized in that** said upper sheet (8) is made of leather or imitation leather and is sewn to a peripheral part of said lower sheet (3) and said pump (4).

4. Method as claimed in any one of claims 1 to 3, **characterized in that** during the molding process the upper sheet (8) is fitted to a lid (102) of the mold by means of pins (104) of the lid and said pump (4) is pushed by means of pins (106) of a die (101) of the mold.

5. Insole (S) obtained with method claimed in any one of the preceding claims, wherein said insole (S) comprises a lower layer (9) of polyurethane foam obtained by injection molding, disposed under a ventilation system (2) with borders (90) folded in such a way to surround the peripheral borders of said ventilation system (2),
**characterized in that**
said ventilation system (2) comprises:
- a pump (4) that forms an air chamber (40) disposed in the user's heel area,
- a lower sheet (3) provided with a plurality of deformable spacers (31) that protrude upwards and disposed in correspondence with the front part of the foot, the deformable spacers (31) are shaped as internally empty rectangular projections, so that the lower side of the sheet (3) is provided with a plurality of recessed seats (34) in correspondence with the deformable spacers (31),
- an upper sheet (8) disposed on the pump (4) and on the lower sheet (3) in order to form a wrapping between lower sheet (3) and upper sheet (8) generating a chamber (35); said upper sheet (8) being provided with holes (80) in communication with said chamber (35) of the wrapping to extract air from inside the shoe,
- a connection pipe (20) that connects the chamber (35) of the wrapping to the chamber (40) of the pump, and
- an air outlet conduit (21) that connects the chamber (40) of the pump with the outside of the shoe for air ejection.

6. Insole (S) as claimed in claim 5, **characterized in that** said upper sheet (8) is made of leather or imitation leather, is shaped as a foot and is disposed above the folded borders (90) of the lower layer of polyurethane foam (9).

7. Insole (S) as claimed in claim 5 or 6, **characterized in that** said pump (4) comprises: a lower semibody (41) made of hard thermoplastic polyurethane (TPU) with Shore A hardness higher than 95 and an upper semibody (42) made of soft thermoplastic polyurethane (TPU) with Shore A hardness lower than 65.

8. Insole (S) as claimed in any one of claims 5 to 7, **characterized in that** said ventilation system (2) also comprises:
- a first non-return valve (5) disposed between said pump (4) and said air outlet conduit (21) to permit air flow from the chamber (40) of the pump to the air outlet conduit (21) and not in reverse direction; and
- a second non-return valve (6) disposed between said pump (4) and said connection conduit (20) to permit air flow from the connection conduit (20) towards the chamber (40) of the pump and not in reverse direction.

9. Insole (S) as claimed in claim 8, **characterized in that** said first and second non-return valve (5, 6) are disposed inside corresponding channels (71, 72) of a valve unit (7) formed of a rectangular block (7) disposed in the front part of said pump (4).

10. Shoe comprising:
- an upper (T), and
- a bottom (1) fixed to the upper,
**characterized in that** it comprises a insole (S) as claimed in any one of claims 5 to 9.

11. Shoe as claimed in claim 10, **characterized in that** it is an accident-prevention shoe, comprising a metal plate or Kevlar sheet disposed in the bottom (1) or in an outsole (11) applied under the bottom.

## Patentansprüche

1. Verfahren zur Herstellung einer Mittelsohle (S) für Schuhe umfassend folgende Schritte:
- Herstellung eines Belüftungssystems (2) und Anordnung des Belüftungssystems (2) in einem Formwerkzeug (100) und
- Spritzgießen von Polyurethanschaumstoff, in der Weise, dass eine untere Schicht (9) aus Polyurethanschaumstoff gebildet wird, die unter dem Belüftungssystem (2) angeordnet ist und derart gebogene Ränder (90) aufweist, dass die Außenränder des Belüftungssystems (2) eingefasst sind und auf diese Weise die Mittelsohle (S) realisiert wird, die die untere Schicht (9) und das Belüftungssystem (2) umfasst,
**dadurch gekennzeichnet, dass**
das Belüftungssystem (2) mittels folgender Schritte erhalten wird:
- Anschließen an eine Pumpe (4) einer unteren Folie (3) mittels eines Verbindungsrohrs (20), wobei die untere Folie (3) die Form des vorderen Teil eines Fußbetts aufweist und mit verformbaren Distanzstücken (31) versehen ist, die nach oben ragen; die verformbaren Distanzstücke (31) sind als rechteckige, inwendig hohle Ausstülpungen ausgebildet, so dass die untere Seite der unteren Folie (3) mit einer Vielzahl von tief liegenden Sitzen (34) an den verformbaren Distanzstücken (31) versehen ist,
- Anschließen eines Luftauslassrohrs (21) an die Pumpe (4),
- Anordnen einer oberen Folie (8) auf der Pumpe (4) und auf der unteren Folie, so dass eine Umhüllung zwischen der unteren Folie und der oberen Folie gebildet wird, wodurch eine Kammer (35) entsteht, wobei die obere Folie (8) mit Löchern (80) versehen ist, die mit der Kammer (35) der Umhüllung in Verbindung stehen.

2. Verfahren nach Anspruch 1, **dadurch gekennzeichnet, dass** die Pumpe (2) durch Koppelung einer unteren, starren Halbschale (41) und einer oberen, verformbaren Halbschale (42) erhalten wird, so dass eine Pumpenkammer (40) gebildet wird und die Pumpenkammer (40) während des Einspritzens des Polyurethanschaumstoffs auf einem Druck von ca. zwei Atmosphären gehalten wird.

3. Verfahren nach Anspruch 1 oder 2, **dadurch gekennzeichnet, dass** die obere Folie (8) aus Leder oder Kunstleder besteht und auf einen äußeren Teil der unteren Folie (3) und der Pumpe (4) aufgenäht wird.

4. Verfahren nach einem beliebigen Anspruch 1 - 3, **dadurch gekennzeichnet, dass** während des Spritzgießens die obere Folie (8) an einem Deckel (102) des Formwerkzeugs mittels Stiften (104) des Deckels angepasst und die Pumpe (4) mittels Stiften (106) einer Matrize (101) des Formwerkzeugs gedrückt wird.

5. Mittelsohle (S), erhalten mit dem Verfahren nach einem beliebigen der vorstehenden Ansprüche, wobei die Mittelsohle (S) eine untere Schicht (9) aus Polyurethanschaumstoff umfasst, die durch Spritzgießen erhalten wird, unter einem Belüftungssystem (2) angeordnet ist und derart gebogene Ränder (90) aufweist, dass die Außenränder des Belüftungssystems (2) eingefasst sind,
**dadurch gekennzeichnet, dass** das Belüftungssystem (2) Folgendes umfasst:
- eine Pumpe (4), die eine Luftkammer (40) bildet, die dazu bestimmt ist, im Bereich der Ferse des Trägers angeordnet zu werden,
- eine untere Folie (3), die mit einer Vielzahl von verformbaren, nach oben ragenden Distanzstücken (31) versehen und dazu bestimmt ist, am vorderen Teil des Fußbetts angeordnet zu werden; die verformbaren Distanzstücke (31) sind als rechteckige, inwendig hohle Ausstülpungen ausgebildet, so dass die untere Seite der unteren Folie (3) mit einer Vielzahl von tief liegenden Sitzen (34) an den verformbaren Distanzstücken (31) versehen ist,
- eine obere Folie (8), die auf der Pumpe (4) und auf der unteren Folie (3) angeordnet ist, so dass eine Umhüllung zwischen der unteren Folie (3) und der oberen Folie (8) gebildet wird, welche eine Kammer (35) erzeugt, wobei die obere Folie (8) mit Löchern (80) versehen ist, die mit der Kammer (35) der Umhüllung in Verbindung stehen, um die Luft aus dem Inneren des Schuhs abzusaugen,
- ein Verbindungsrohr (20), das die Kammer (35) der Umhüllung und die Kammer (40) der Pumpe verbindet, und
- ein Luftauslassrohr (21), das die Pumpenkammer (40) mit dem Äußeren des Schuhs verbindet, um die Luft auszustoßen.

6. Mittelsohle (S) gemäß Anspruch 5, **dadurch gekennzeichnet, dass** die obere Folie (8) aus Leder oder Kunstleder besteht, die Form eines Fußbett aufweist und oberhalb der gebogenen Ränder (90) der unteren Schicht aus Polyurethanschaumstoff (9) angeordnet ist.

7. Mittelsohle (S) nach Anspruch 5 oder 6, **dadurch gekennzeichnet, dass** die Pumpe (4) Folgendes umfasst: eine untere Halbschale (41), die aus thermoplastischem Hartpolyurethan (TPU) mit einer Shore-A-Härte von größer als 95 hergestellt ist, und eine obere Halbschale (42), die aus thermoplastischem Weichpolyurethan (TPU) mit einer Shore-A-Härte kleiner als 65 hergestellt ist.

8. Mittelsohle (S) nach einem beliebigen Anspruch 5 - 7, **dadurch gekennzeichnet, dass** das Belüftungssystem (2) ferner Folgendes umfasst:
- ein erstes Rückschlagventil (5), das zwischen der Pumpe (4) und dem Luftauslassrohr (21) angeordnet ist, um einen Luftstrom aus der Pumpenkammer (40) zum Luftauslassrohr (21), jedoch nicht in die umgekehrte Richtung zu ermöglichen; und
- ein zweites Rückschlagventil (6), das zwischen der Pumpe (4) und dem Verbindungsrohr (20) angeordnet ist, um einen Luftstrom von der Verbindungsleitung (20) zur Pumpenkammer (40), aber nicht in die umgekehrte Richtung zu ermöglichen.

9. Mittelsohle (S) nach Anspruch 8, **dadurch gekennzeichnet, dass** das erste und das zweite Rückschlagventil (5, 6) in entsprechenden Kanälen (71, 72) einer Ventilgruppe (7) angeordnet sind, bestehend aus einem rechteckigen Block (7), der im vorderen Teil der Pumpe (4) angeordnet ist.

10. Schuh (1) umfassend:
- einen Schaft (T), und
- eine Innensohle (1), die am Schaft (T) befestigt ist,
**dadurch gekennzeichnet, dass** er eine Mittelsohle (S) nach einem beliebigen Anspruch 5 bis 9 umfasst.

11. Schuh nach Anspruch 10, **dadurch gekennzeichnet, dass** es ein Sicherheitsschuh ist, umfassend eine Metallplatte oder eine Kevlarfolie, die in der Innensohle (1) oder in einer unter der Innensohle angebrachten Laufsohle (11) angeordnet ist.

## Revendications

1. Méthode pour la production d'un intercalaire (S) pour chaussure comprenant les étapes suivantes :
- réalisation d'un système d'aération (2) et disposition du ledit système d'aération (2) dans un moule (100), et
- moulage par injection de polyuréthane expansé, de manière à former une couche inférieure (9) de polyuréthane expansé, disposée sous ledit système d'aération (2) et ayant des bords repliés (90) de manière à entourer les bords périphériques du dit système d'aération (2), en obtenant ainsi l'intercalaire (S) comprenant la couche inférieure (9) et le système d'aération (2),
**caractérisée en ce que**
ledit système d'aération (2) est obtenu en fonction des étapes suivantes :
- raccordement d'une pompe (4) à une feuille inférieure (3), à l'aide d'un tuyau de raccordement (20), ladite feuille inférieure (3) ayant la forme de la partie antérieure de la plante du pied et étant dotée d'écarteurs déformables (31) forjetant vers le haut, les écarteurs déformables (31) sont réalisés sous forme de débordements rectangulaires vides à l'interne, de manière que le côté inférieur de la feuille inférieure (3) soit doté d'une pluralité de sièges encastrés (34) en correspondance des écarteurs déformables (31),
- raccordement d'un tuyau de sortie de l'air (21) à ladite pompe (4)
- application d'une feuille supérieure (8) sur ladite pompe (4) et sur ladite feuille inférieure, de manière à former une enveloppe entre la feuille inférieure et la feuille supérieure qui génère une chambre (35), ladite feuille supérieure (8) étant munie de trous (80) communicants avec ladite chambre (35) de l'enveloppe.

2. Méthode selon la revendication 1, **caractérisée en ce que** ladite pompe (2) est obtenue moyennant le couplage d'une semi-coque inférieure rigide (41) et d'une semi-coque supérieure déformable (42) de manière è obtenir une chambre (40) de pompage et pendant ladite étape d'injection du polyuréthane expansé, ladite chambre (40) de la pompe est maintenue à une pression d'environ deux atmosphères.

3. Méthode selon la revendication 1 ou 2, **caractérisée en ce que** ladite feuille supérieure (8) est en cuir ou en similicuir et qu'elle est cousue sur une partie périphérique de ladite feuille inférieure (3) et de ladite pompe (4).

4. Méthode selon l'une quelconque des revendications de 1 à 3, **caractérisée en ce que** ladite étape de moulage prévoit de bloquer ladite feuille supérieure (8) à un couvercle (102) du moule à l'aide de pivots (104) du couvercle et de pousser ladite pompe (4) moyennant les pivots (106) d'une matrice (101) du moule.

5. Intercalaire (S) obtenu avec la méthode selon l'une quelconque des revendications précédentes, où ledit intercalaire (S) comprend une couche inférieure (9) de polyuréthane expansé obtenue par moulage à injection, disposée sous un système d'aération (2) ayant des bords repliés (90) de manière à entourer les bords périphériques du dit système d'aération (2),
**caractérisé en ce que**
ledit système d'aération (2) comprend :
- une pompe (4) qui forme une chambre à air (40) destinée à être disposée en correspondance du talon de l'utilisateur,
- une feuille inférieure (3) munie d'une pluralité d'écarteurs déformables (31) forjetant vers le haut et destinée à être disposée en correspondance de la partie antérieure de la plante du pied, les écarteurs déformables (31) sont réalisés sous forme de débordements rectangulaires vides à leur interne, de manière que le côté inférieur de la feuille inférieure (3) soit muni d'une pluralité de sièges encastrés (34) en correspondance des écarteurs déformables (31),
- une feuille supérieure (8) disposée sur la pompe (4) et sur la feuille inférieure (3) de manière à former une enveloppe entra la feuille inférieure (3) et la feuille supérieure (8) qui génère une chambre (35) ; ladite feuille supérieure (8) prévoyant des trous (80) communicants avec ladite chambre (35) de l'enveloppe pour aspirer l'air à l'intérieur de la chaussure,
- un tuyau de raccordement (20) qui relie la chambre (35) de l'enveloppe à la chambre (40) de la pompe, et
- un conduit de sortie de l'air (21) qui relie la chambre (40) de la pompe avec l'extérieur de la chaussure pour l'expulsion de l'air.

6. Intercalaire (S) selon la revendication 5, **caractérisé en ce que** ladite feuille supérieure (8) est en cuir ou en similicuir, a la forme d'une plante de pied et est disposée au-dessus des bords repliés (90) de la couche inférieure en polyuréthane expansé (9).

7. Intercalaire (S) selon la revendication 5 ou 6, **caractérisé en ce que** ladite pompe (4) comprend : une semi-coque inférieure (41) réalisée en polyuréthane thermoplastique dur (TPU) avec dureté Shore A majeure de 95 et une semi-coque supérieure (42) réalisée en polyuréthane thermoplastique souple (TPU) avec dureté Shore A inférieure à 65.

8. Intercalaire (S) selon l'une quelconque des revendications de 5 à 7, **caractérisé en ce que** ledit système d'aération (2) comprend également :
- un premier clapet anti-retour (5) disposé entre ladite pompe (4) et ledit conduit de sortie de l'air (21) pour consentir un flux d'air allant de la chambre (40) de la pompe vers le conduit de sortie de l'air (21) et non en direction inverse ; et
- un second clapet anti-retour (6) disposé entre ladite pompe (4) et ledit conduit de raccordement (20) pour consentir un flux d'air depuis le conduit de raccordement (20) vers la chambre (40) de la pompe et non en direction inverse.

9. Intercalaire (S) selon la revendication 8, **caractérisé en ce que** le premier et le second clapet anti-retour (5, 6) sont disposés dans des correspondants canaux (71, 72) d'une unité de soupapes (7) constituée par un bloc rectangulaire (7) disposé dans la partie antérieure de ladite pompe (4).

10. Chaussure comprenant :
- une empeigne (T), et
- une première de propreté (1) fixée à l'empeigne,
**caractérisée en ce qu'**elle comprend un intercalaire (S) selon l'une quelconque des revendications de 5 à 9.

11. Chaussure selon la revendication 10, **caractérisée en ce que** c'est une chaussure de sécurité, comprenant une plaque métallique ou une feuille de Kevlar disposée dans la première de propreté (1) ou dans une semelle (11) appliquée sous la première de propreté.
